# EUROPÄISCHE PATENTSCHRIFT

(11) **EP 0 989 311 B1**
(45) Veröffentlichungstag und Bekanntmachung des Hinweises auf die Patenterteilung: **13.08.2003**
(21) Anmeldenummer: 99117387.3
(22) Anmeldetag: 03.09.1999
(51) Int. Cl.: F16B 39/26, F16B 35/04

(54) **Verschraubungsteil**
SCREW FITTING ELEMENT
ELEMENT A VISSER

(30) Priorität: 22.09.1998 DE 29817010 U
(43) Veröffentlichungstag der Anmeldung: 29.03.2000
(73) Patentinhaber: NEDSCHROEF PLETTENBERG GmbH, D-58840 Plettenberg (Holthausen) (DE)
(72) Erfinder: Kob, Peter-Wim, 58849 Herscheid (DE)
(74) Vertreter: Alber, Norbert, Dipl.-Ing.

(56) Entgegenhaltungen:
- DE-A- 19 650 453
- DE-U- 8 990 022
- US-A- 3 971 086
- US-A- 4 941 787

## Beschreibung

### I. Anwendungsgebiet

Die Erfindung betrifft eine Schraubverbindung entsprechend der Merkmale aus dem ersten Teil des Anspruchs 1 (US 3 971 086 A).

### II. Technischer Hintergrund

Normalerweise wird mittels einer Verschraubung ein Verschraubungsobjekt, z. B. zwei miteinander zu verbindende Platten, fixiert, indem eine Schraube durch einen entsprechenden Durchlaß im Verschraubungsobjekt hindurchgesteckt und von der Gegenseite eine Mutter auf das Außengewinde der Schraube aufgeschraubt wird, bis durch Anlage am Verschraubungsobjekt - entweder durch die Mutter und den Schraubenkopf direkt oder mittels zwischengelegter Beilagscheiben etc. - eine so große Vorspannung in der Verschraubung erzielt ist, daß ein selbsttätiges Lösen der Verschraubung nicht mehr möglich ist.

Die durch die Vorspannung bewirkten Kräfte in axialer Richtung nimmt dabei in der Regel das Verschraubungsobjekt zwischen Schraube und Mutter auf.

Wenn dieses Verschraubungsobjekt jedoch aus einem Material besteht, das diese hohe Preßkraft entweder kurzfristig oder auch nur auf Dauer nicht aufzunehmen in der Lage ist, muß die Vorspannkraft der Verschraubung beschränkt werden. Dies ist insbesondere bei Verschraubungsobjekten aus Kunststoff oder anderen deformierbaren Objekten der Fall.

Hierfür sind unterschiedliche Lösungen bekannt:

Entweder wird die Verschraubung nur mit einem niedrigen, definierten Drehmoment festgezogen. Da dieses niedrige Drehmoment nicht mehr zuverlässig das selbsttätige Lösen der Verschraubung, z. B. durch Vibrationen, verhindern kann, muß eine verstärkte Selbsthemmung der Verschraubung im Gewinde erzielt werden, entweder durch z. B. eine Kunststoffzwischenlage zwischen den Gewindegängen von Schraube und Mutter, oder durch einen in das Gewinde eingebrachten Kleber, der nach Herstellen der Schraubverbindung aushärtet.

Diese Lösung weist Nachteile sowohl hinsichtlich der Montagezeit als auch im Falle einer notwendigen Demontage der Schraubverbindung auf.

Eine andere Lösung besteht darin, das Verschraubungsobjekt im Bereich der Verschraubung so zu stabilisieren, daß es die gewünschten hohen axialen Preßkräfte der Verschraubung aufzunehmen in der Lage ist. Bei Kunststoffteilen geschieht dies dadurch, daß an der beabsichtigten Stelle eine Durchgangsbuchse aus Metall in das Kunststoffteil entweder bereits bei der Fertigung mit eingegossen wird, also als Einlegeteil bei einem aus Spritzguß hergestellten Kunststoffteil, oder nachträglich in eine entsprechende Durchgangsbohrung des Kunststoffteiles eingeklebt wird. Beides ist aufwendig in der Realisierung.

Eine weitere Möglichkeit besteht darin, beim Herstellen der Verschraubung, um den Schaft der Schraube herum eine Distanzbuchse aufzusetzen, deren axiale Länge der Dicke des Verschraubungsobjektes entspricht, insbesondere in dessen maximal gewünschten Verpressungszustand.

Auch diese Lösung ist insofern umständlich, als die Einheit aus Schraube und aufgesteckter Distanzbuchse eine labile Einheit wegen des dazwischen vorhandenen Spieles darstellt, und somit das Einführen dieser Einheit in die Durchgangsöffnung des Verschraubungsobjektes nicht einfach und damit unter Umständen zeitaufwendig ist. Insbesondere kann die Distanzbuchse jederzeit vom Schraubenschaft herabfallen, so daß das Eindringen der Schraube mit Distanzbuchse von oben nach unten nur mit zwei Händen möglich ist.

Damit ist insbesondere ein automatisches Ansetzen und Montieren einer solchen Verschraubung, wie es beispielsweise in der Kraftfahrzeugmontage gewünscht wird, nicht möglich.

### III. Darstellung der Erfindung

### a) Technische Aufgabe

Es ist daher die Aufgabe der vorliegenden Erfindung, eine Mutter bzw. Schraube sowie eine daraus hergestellte Verschraubung zu schaffen, bei der ohne diesbezügliche Vorbereitungsmaßnahmen am Verschraubungsobjekt dieses Verschraubungsobjekt nur einer begrenzten Verpressung in axialer Richtung durch die Verschraubung unterzogen wird, und dies bei schneller und einfacher Montagemöglichkeit der Verschraubung.

### b) Lösung der Aufgabe

Diese Aufgabe wird durch die Merkmale des Anspruchs 1 gelöst. Vorteilhafte Ausführungsformen ergeben sich aus den Unteransprüchen.

Dadurch, daß der Hals, der als Distanzteil und damit als Begrenzung für die axiale Verpressung des Verschraubungsobjektes dient, einstückig mit der Mutter ausgebildet und insbesondere gegenüber der ihn tragenden Mutter unverlierbar angeordnet ist, ist eine automatische Handhabung wie bei einem konventionellen Verschraubungsteil möglich. Durch eine entsprechende Konizität ist das Einführen in den Durchlaß des Kunststoffteiles auf einfache Art und Weise möglich, insbesondere durch ein im Ausgangszustand noch vorhandenes Spiel zwischen dem Außendurchmesser des Halses und dem Innendurchmesser des Durchlasses im Verschraubungsobjekt, also z. B. dem Kunststoffteil.

Durch den vom freien Ende des Halses zum Kopf der Mutter hin zu nehmende Durchmesser wird beim Aufschieben der Flanschscheibe vom freien Ende her die Flanschscheibe aufgrund der Keilwirkung des Halses an Ihrem Innendurchmesser leicht gedehnt.

Beim Erreichen der Rindnut am Außenumfang des Halses, beispielsweise am Übergang vom Hals zum Kopf der Mutter zieht sich die Flanschscheibe wieder auf ihren ursprünglichen Innendurchmesser zurück und ist dadurch formschlüssig in der Nut aufgenommen.

Dieses Aufrasten wird erleichtert, durch radial vom Innenumfang nach außen geführte Schlitze an der Flanschscheibe und/oder Verwendung eines Materials für die Flanschscheibe, welches eine radiale Dehnung zulässt.

Auch ein Außendurchmesser des Halses, der durch den Innenumfang der Flanschscheibe beim Aufscheiben zusammengedrückt werden kann, und nach Erreichen der Ringnut durch die Flanschscheibe wieder den ursprünglichen Durchmesser einnimmt, der im entspannten Zustand immer größer ist als der Innendurchmesser der Flanschscheibe, führt zum gleichen Ergebnis.

Dadurch kann eine unverlierbare Einheit aus Mutter und Flanschscheibe hergestellt werde, ohne nach dem Zusammensetzen dieser beiden Teile eine Kaltverformung an der Mutter, beispielsweise das Umbördeln eines Kragens etc., durchführen zu müssen.

Dies ermöglicht es überhaupt erst, die Nut zur Aufnahme der Flanschscheibe direkt am Übergang zwischen Kopf der Mutter und Beginn des Halses, und nicht am vorderen freien Ende des Halses anzuordnen, was die durch Stauchen, Umbördeln etc. einzig möglich erreichbare Stelle für eine Kaltverformung wäre.

Ein weiterer Vorteil liegt darin, dass wegen der einstöckigen Ausbildung von Hals und Mutter das Innengewinde der Verschraubung sich auch in den Hals, insbesondere über die gesamte axiale Länge des Halses, erstrecken kann, und darüber hinaus wahlweise auch in den Mutterkopf hinein, unabhängig davon, ob es sich um eine geschlossene Mutter (Hutmutter) oder eine offene Mutter und damit insgesamt eine Durchgangsbohrung handelt.

Aufgrund der resultierenden sehr großen Gewindelänge können Schrauben bzw. Muttern aus Material mit geringerer Zugfestigkeit, wie beispielsweise Kunststoff, an Stellen verwendet werden, an denen bisher Schrauben und Muttern aus Metall verwendet werden mussten.

Der Außenumfang des Halses und/oder der Innenumfang der Flanschscheibe sind insbesondere kreisförmig.

Für den Fall, daß die Dicke des Verschraubungsobjektes nicht exakt bekannt ist aufgrund relativ großer Fertigungstoleranzen, kann dennoch in weiten Bereichen mit einem Hals gleicher axialer Länge gearbeitet werden, indem die Verschraubung zusätzlich an wenigstens einem ihrer Enden, vorzugsweise an beiden Enden, also Mutter und Schraube, ein federndes und in axialer Richtung längenveränderliches Element zum Ausgleich der Dickentoleranzen des Verschraubungsobjektes aufweist. Vorzugsweise kann das federnde Element dabei funktionsvereinigt sein mit einer Beilagscheibe bzw. Flanschscheibe, die der Vergrößerung der Auflagefläche am Verschraubungsobjekt dient. Diese Funktion erfüllt beispielsweise eine sogenannte Tellerfeder, wobei insbesondere Tellerfedern mit stark degressiver Federkurve zu bevorzugen sind, wobei also bereits unmittelbar zu Beginn der Verformung des federnden Elementes deren Gegenkraft bereits sehr hoch ist, insbesondere gleich bleibt bei weiterer axialer Deformierung und insbesondere bis zur maximalen axialen Deformierung des federnden Elementes.

Dadurch ist sichergestellt, daß unabhängig vom Grad des axialen Zusammenpressens des federnden Elementes immer die gleiche axiale Vorspannung auf der Verschraubung und damit auch auf dem Verschraubungsobjekt lastet, und somit unabhängig von der exakten ursprünglichen Dicke des Verschraubungsobjektes.

### c) Ausführungsbeispiele

Eine Ausführungsform gemäß der Erfindung ist im folgenden anhand der Figuren beispielhaft näher beschrieben. Es zeigen:
- Fig. 1:: eine Mutter mit Hals,
- Fig. 2:: eine Schraubverbindung.
- Fig. 3:: eine Schraube mit Hals
- Fig. 4:: eine Schraube mit integrierter Flanschscheibe

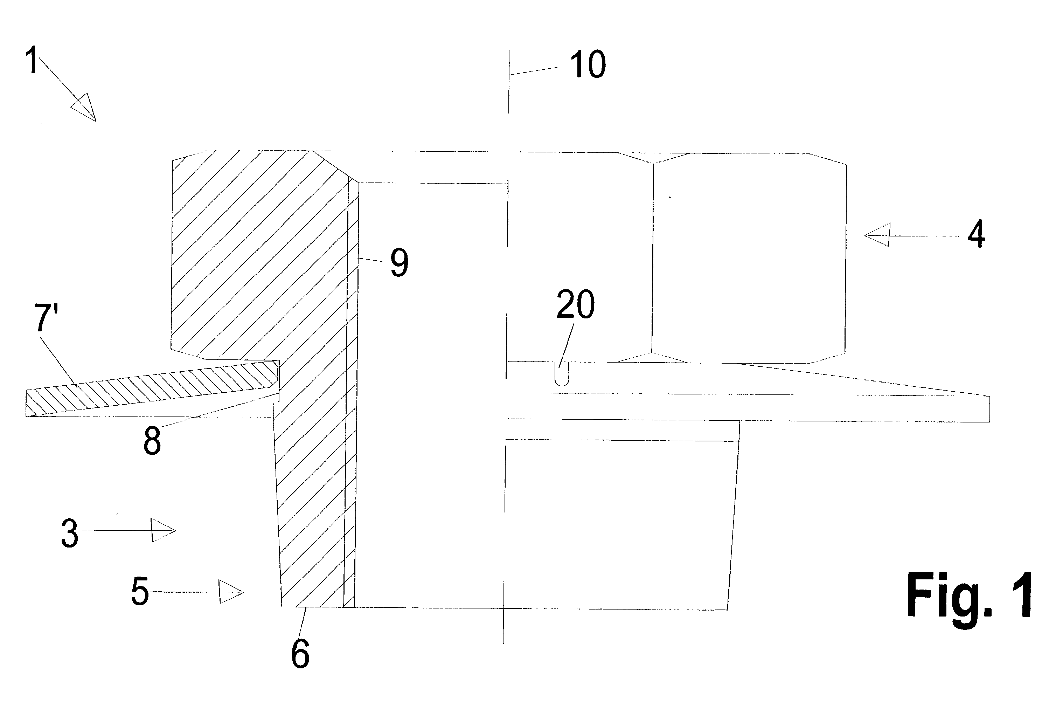

Fig. 1 zeigt eine Mutter 1, die auf einer ihrer Stirnseiten einen Fortsatz in Form eines Halses 3, konzentrisch zur axialen Richtung 10 der Mutter 1 angeordnet aufweist. Das Innengewinde (9) durchdringt sowohl den Kopf (4) als auch diesen Hals (3), so daß eine Durchgangsöffnung vorhanden ist. Auf der vom Hals (3) abgewandten Seite des Kopfes (4) kann diese Öffnung auch verschlossen sein, also eine Mutter in Form einer Hutmutter vorliegen.

Von wenigstens einer Stirnseite her muß das Innengewinde 9 jedoch zur Aufnahme einer entsprechenden, in Fig. 1 nicht dargestellten, Schraube offen sein.

Der Hals 3 weist - wenigstens im Bereich des stirnseitigen, freien Endes 5 - am Außenumfang eine konische Verjüngung auf, die das Einführen des Halses 3 in eine Öffnung erleichtern soll. Vorzugsweise ist der Hals 3 mit einem runden Außenumfang ausgestattet.

Weiterhin ist am Übergang zwischen dem Kopf 4 und dem Hals 3 eine Ringnut 8 angeordnet, um darin insbesondere eine Flanschscheibe, wie etwa die in Fig. 1 dargestellte leicht konische, federnde Flanschscheibe 7', also eine Tellerfeder, drehbar, jedoch unverlierbar aufzunehmen. Zu diesem Zweck weist die Flanschscheibe 7' eine zentrale Durchgangsöffnung auf, die geringfügig größer ist als der Außendurchmesser der Mutter 1 im Grunde der Nut 8, jedoch kleiner als der größte Durchmesser im Verlauf des Halses 3.

Dadurch ist es möglich, mit ausreichendem Kraftaufwand und ggf. einem geeigneten Werkzeug die Flanschscheibe 7' auf den Hals 3 vom freien stirnseitigen Ende her aufzuschieben, und über die dickste Stelle des Halses 3 hinwegzuschieben, bis die Flanschscheibe 7' mit ihrem Innendurchmesser in der Ringnut 8 liegt. In der Ringnut 8 kann die Flanschscheibe 7' entsprechend der Breite der Nut in axialer Richtung 10 hin und hergeschoben und auch um die Achsrichtung relativ zur Mutter 1 gedreht werden. Ohne großen Kraftaufwand kann die Flanschscheibe 7' jedoch nicht von der Mutter 1 abgezogen werden. Dies ist nur maschinell und in der Regel nur mit einem entsprechenden Werkzeug möglich. Aufschieben und Abziehen der Flanschscheibe 7' kann erleichtert werden durch radiale Schlitze 20, die vom Innenumfang der Flanschscheibe 7' aus radial nach außen gerichtet sind, jedoch nicht den äußeren Umfang der Flanschscheibe 7' erreichen.

In Fig. 1 ist - wie auch in allen folgenden Figuren - jeweils die linke Hälfte im Längsschnitt und die rechte Hälfte in der Ansicht dargestellt. Zusätzlich kann in Fig. 1 das Innengewinde sich nur über einen Teil der axialen Länge erstrecken, beispielsweise nur im Bereich des Kopfes 4 oder auch nur im Bereich des Halses 3, je nachdem, welches Dehnungsverhalten für die eingeschraubte, in Fig. 1 nicht dargestellte, Schraube erwünscht ist.

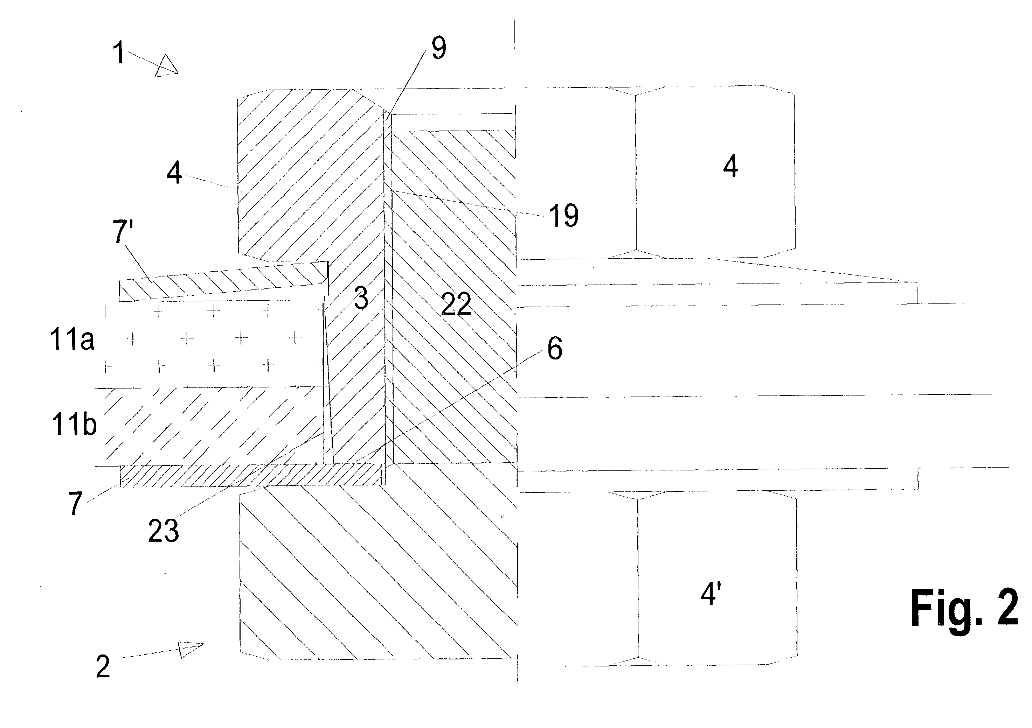

Fig. 2 zeigt eine komplette Schraubverbindung, wie sie mit einer Mutter gemäß Fig. 1 hergestellt ist.

Dabei zeigt die rechte Bildhälfte in Seitenansicht die Schraubverbindung mit noch lose an dem Verschraubungsobjekt 11a, 11b anliegenden Verschraubungsteilen, die linke Seite - im Längsschnitt - dagegen die fest angezogene Verschraubung mit etwas flach gedrückter, noch konischer, federnder Flanschscheibe 7'.

Dabei ist zu erkennen, daß das aus zwei gegeneinander gelegten Teilen bestehende Verschraubungsobjekt 11a, 11b eine fluchtende Durchstecköffnung 23 aufweist, deren Durchmesser etwas größer ist als der Außendurchmesser des Halses 3, welcher beide Verschraubungsobjekte 11a, 11b durchdringt.

Im entspannten Zustand ist die axiale Länge des Halses, also von dessen axialer Anschlagfläche 6 bis zur nächstliegenden stirnseitigen Fläche des Kopfes 4 der Mutter 1, geringer als die Summe der Dicken der Verschraubungsobjekte 11a, 11b zzgl. der axialen Erstreckung der entspannten federnden Flanschscheibe 7'. Durch Einstecken der Schraube 2 mit ihrem Schaft 22 und Einschrauben dessen Außengewinde 19 in das Innengewinde 9 der Mutter 1 wird - unter ggf. zusätzlicher Zwischenlegung einer Flanschscheibe 7 unter die Schraube 2 - das Verschraubungsobjekt 11a, 11b mit zunehmendem Festziehen gegen die federnde Flanschscheibe 7' gedrückt und diese in ihrer axialen Erstreckung solange verkürzt, bis der Kopf 4' der Schraube 2 bzw. ggf. dessen Flanschscheibe 7 gegen den stirnseitigen, ringförmigen Anschlagflansch 6 des Halses 3 anliegt. Auf diese Art und Weise können Dickenunterschiede des Verschraubungsobjektes 11a, 11b überwunden werden, die maximal dem Unterschied der axialen Erstreckungen der federnden Flanschscheibe 7' im entspannten und im vollständig flach gedrückten Zustand entsprechen.

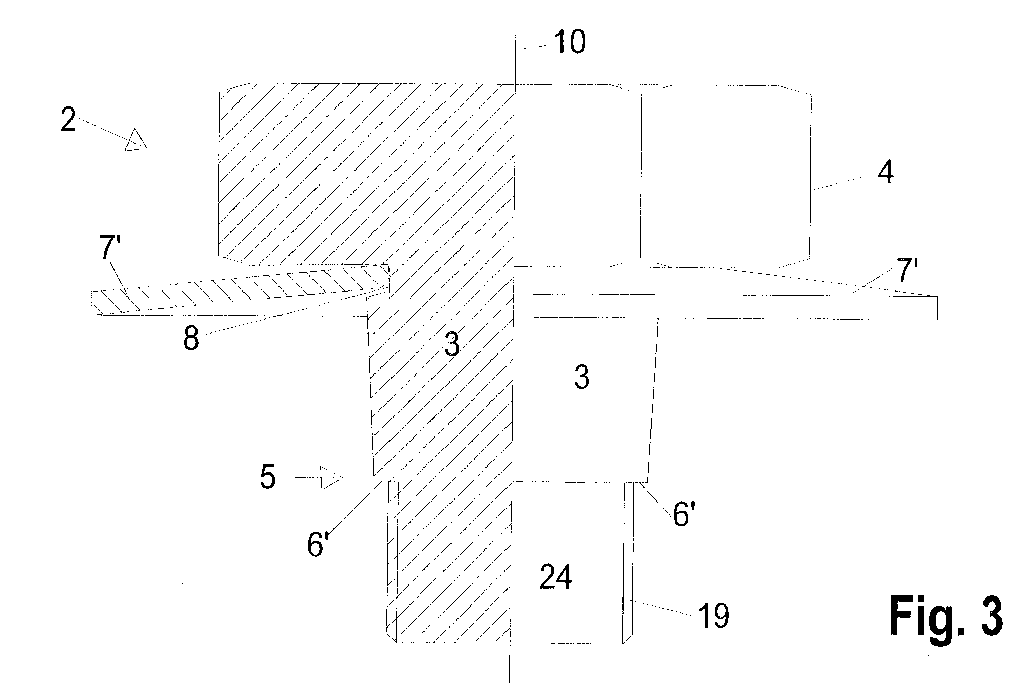

Fig. 3 zeigt die analoge Ausbildung als Schraube:

Dabei schließt sich an den Kopf 4 der Schraube nicht unmittelbar der Gewindezapfen 24 an, sondern dazwischen erstreckt sich ein gewindeloser Hals 3 aus ebenfalls massivem Material, dessen Außendurchmesser zum einen vorzugsweise etwas größer ist als der Außendurchmesser des Außengewindes 19 auf dem Gewindezapfen 24 am freien Ende.

Darüber hinaus ist der Hals 3 wiederum an seinem Außendurchmesser leicht konisch, also vom freien Ende, dem Gewindezapfen 24 aus, zum Kopf hin mit leicht zunehmendem Durchmesser ausgestattet, bei vorzugsweise rundem Querschnitt.

Am Übergang vom Kopf 4 zum Hals 3 ist wiederum die Ringnut 8 am Außenumfang eingearbeitet, in die die Flanschscheibe bzw. federnde Flanschscheibe 7' drehbar, jedoch unverlierbar gehalten wird.

Wie auch bei der Lösung als Mutter wird die Flanschscheibe bzw. federnde Flanschscheibe 7' dort positioniert, in dem im entspannten Zustand der Innendurchmesser der Flanschscheibe 7' etwas größer ist als der Durchmesser am Nutengrund der Ringnut 8, jedoch kleiner als der Außendurchmesser am Hals 3 an dessen dickster Stelle, und vorzugsweise auch größer als der Außendurchmesser des Halses 3 an dessen dünnster Stelle.

Damit kann die Flanschscheibe 7' zunächst ohne Kontakt lose über das Außengewinde 19 und anschließend auf den Hals 3 aufgeschoben werden, wobei mit zunehmender Aufschiebung auf den Hals 3 die Flanschscheibe 7 an ihrem Innendurchmesser etwas radial ausgedehnt wird, bis nach Erreichen der Ringnut 8 diese Dehnung wieder zurückgeht, und dadurch die Flanschscheibe 7' in radialer Richtung mit Spiel ausgestattet und damit drehbar, jedoch in axialer Richtung unverlierbar in der Nut 8 aufgenommen ist.

Die stirnseitige Anschlagfläche 6 befindet sich am freien Ende des Halses 3, wo eine Schulter gegenüber dem Gewindezapfen 24, der einen geringeren Durchmesser aufweist, ausgebildet ist.

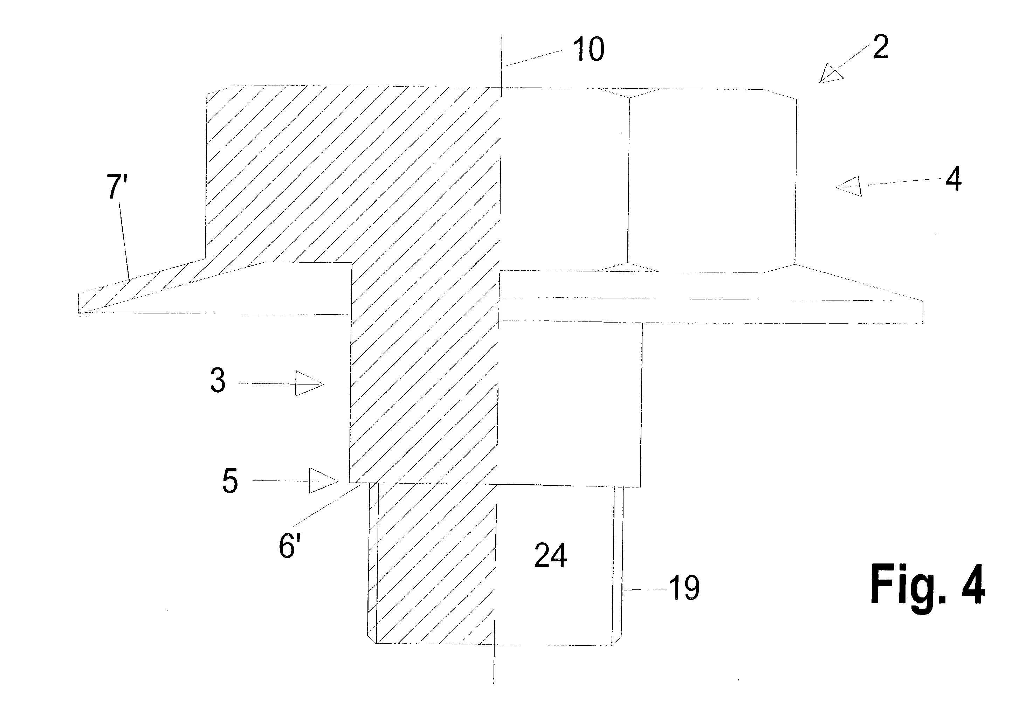

Fig. 4 zeigt eine Schraube, die sich gegenüber derjenigen der Fig. 3 dadurch unterscheidet, dass nunmehr die federnde, leicht konisch ausgebildete, Flanschscheibe 7' einstückig zusammen mit der Schraube ausgebildet ist, in dem sie sich vom Außenumfang des Kopfes 4 der Mutter, an dessen schaftseitigem axialen Ende, in Richtung des Schaftes erstreckt, und dadurch ebenfalls einen Dickenausgleich für die zu verschraubenden Objekte bietet.

Da bei dieser Bauform ein Aufrasten der Flanschscheibe 7' auf die Schraube oder Mutter nicht notwendig ist, kann in diesem Fall auch der Außendurchmesser des gewindelosen Halses 3 zylindrisch statt konisch ausgebildet sein.

Die analoge Lösung ist auch in Form einer Mutter realisierbar, wobei dann ebenfalls der Hals 3 keinen konischen Außendurchmesser aufweisen muss.

Die anhand der Mutter beschriebenen Vorteile wie Innengewinde auch entlang des Halsbereiches und Wegfall einer Nachbearbeitung der Mutter, insbesondere einer Kaltverformung, bleiben daher enthalten.

### BEZUGSZEICHENLISTE

- 1: Mutter
- 2: Schraube
- 3: Hals
- 4: Kopf
- 5: stirnseitige freie Ende des Halses
- 6: Anschlagflansch
- 7: Flanschscheibe
- 7': federnde Flanschscheibe
- 8: Ringnut
- 9: Innengewinde
- 10: axiale Richtung
- 11a, 11b: Verschraubungsobjekt
- 19: Außengewinde
- 20: Schlitze
- 21: Fortsatz
- 22: Schaft
- 23: Durchstecköffnung
- 24: Gewindezapfen

## Patentansprüche

1. Schraubverbindung mit einer Verschraubung, die eine Mutter (1), eine Schraube (2) sowie wenigstens eine Flanschscheibe (7) als Verschraubungsteile aufweist, sowie wenigstens zwei von der Verschraubung durchdrungene Verschraubungsobjekte (11a, 11b) zwischen der Mutter (1) und der Schraube (2), wobei
- an wenigstens einem Verschraubungsteil einstückig ein Hals (3) angeordnet ist,
- das wenigstens eine Verschraubungsteil, also Mutter oder Schraube, einen Kopf (4) aufweist,
- der Hals (3) im losen Zustand einen kleineren Außendurchmesser aufweist als der Innendurchmesser des Durchganges im Verschraubungsobjekt (11a, 11b), und
- am stirnseitigen freien Ende (5) des Halses (3) eine Anschlagfläche (6) vorgesehen ist,
**dadurch gekennzeichnet, dass**
der Hals (3) die Verschraubungsobjekte (11a, 11b) durchdringt und als Distanzhalter zwischen der Schraube (1) und der Mutter (2) fungiert.

2. Schraubverbindung nach Anspruch 1,
**dadurch gekennzeichnet, dass**
am Übergang zwischen dem Kopf (4) und dem Hals (3) eine Flanschscheibe (7) angeordnet ist.

3. Schraubverbindung nach Anspruch 2,
**dadurch gekennzeichnet, dass**
die Flanschscheibe (7) gegenüber der Einheit aus Kopf (4) und Hals (3) drehbar, jedoch in axialer Richtung (10) unverlierbar, insbesondere in einer Ringnut (8), angeordnet ist.

4. Schraubverbindung nach Anspruch 3,
**dadurch gekennzeichnet, dass**
die Flanschscheibe (7) am Kopf (4) des Verschraubungsteils einstückig und von diesem radial sowie in Richtung des Verschraubungsobjektes axial abstrebend und federnd angeordnet ist.

5. Schraubverbindung nach einem der vorhergehenden Ansprüche,
**dadurch gekennzeichnet, dass**
sich das Innengewinde (9) über die axiale Länge der Mutter (1) und/oder des Halses (3) erstreckt.

6. Schraubverbindung nach einem der vorhergehenden Ansprüche,
**dadurch gekennzeichnet, dass**
sich das Innengewinde (9) im wesentlichen nur über die axiale Länge des Kopfes (4) der Mutter (1) erstreckt.

7. Schraubverbindung nach einem der vorhergehenden Ansprüche,
**dadurch gekennzeichnet, dass**
der Hals (3) einen zum freien Ende (5) hin sich verjüngenden Außendurchmesser aufweist.

8. Schraubverbindung nach einem der Ansprüche 3 bis 7,
**dadurch gekennzeichnet, dass**
die Flanschscheibe (7) eine federnde Flanschscheibe (7'), insbesondere in Form einer Tellerfeder, ist.

9. Schraubverbindung nach einem der Ansprüche 3 bis 8,
**dadurch gekennzeichnet, dass**
der Innendurchmesser der Flanschscheibe (7) im entspannten Zustand kleiner ist als die dickste Stelle des Halses (3), jedoch größer als der Durchmesser des Grundes der Ringnut (8).

10. Schraubverbindung nach einem der Ansprüche 3 bis 9,
**dadurch gekennzeichnet, dass**
vom Innendurchmesser der Flanschscheibe (7 bzw. 7') aus radiale Schlitze in Richtung des Außendurchmessers verlaufen, diesen jedoch nicht erreichen.

11. Schraubverbindung nach einem der Ansprüche 3 bis 10,
**dadurch gekennzeichnet, dass**
der Innendurchmesser der Flanschscheibe (7), insbesondere der federnden Flanschscheibe (7'), größer ist als der Hals (3) an der dünnsten Stelle.

12. Schraubverbindung nach einem der Ansprüche 3 bis 11,
**dadurch gekennzeichnet, dass**
die Flanschscheibe (7) bzw. federnde Flanschscheibe (7') aus einem Material besteht, welches eine Drehung des Innendurchmessers in radialer Richtung ermöglicht.

13. Schraubverbindung nach einem der vorhergehenden Ansprüche,
**dadurch gekennzeichnet, dass**
im festgezogenen Zustand der Schraubverbindung der Kopf (4') der Schraube bzw. ggf. dessen Flanschscheibe (7) gegen den stirnseitigen, ringförmigen Anschlagflansch (6) des Halses 3 anliegt.

## Claims

1. A screwing joint with a screwing which has a nut (1), a screw (2) as well as at least an elastic plain rove (7') and at least two objects to be screwed (11a, 11b) between the nut (1) and the screw (2) penetrated on screwing, whereupon
- there is a sleeve (3) form assembled with at least one of the screwing elements,
- at least one of the screwing elements, namely the nut or the screw, has a head (4),
- the sleeve (3) has a smaller external diameter than the internal diameter of the through bore from the objects to be screwed (11a, 11b), and
- there is a contact surface (6) on the free end (5) at the front side of the sleeve (3), **characterized in that** the sleeve (3) passes through the objects to be screwed (11a, 11b) acting as a spacer between the nut (1) and the screw (2).

2. A screwing joint according to claim 1, **characterized in that** there is a plain rove (7) arranged on the passing between the head (4) and the sleeve (3).

3. A screwing joint according to claim 2, **characterized in that** with respect to the form assembled head (4) and sleeve (3), the plain rove (7) is rotatingly arranged in particular into an annular groove (8) but in such a way that to avoid an unintended detachment in the axial direction (10).

4. A screwing joint according to claim 3, **characterized in that** the plain rove (7) is an elastic one, is form assembled with the head (4) of the screwing element and bears radially against it as well as axially in the direction of the object to be screwed.

5. A screwing joint according to any one of the preceding claims, **characterized in that** the internal thread (9) extends over the axial length of the nut (1) and/or of the sleeve (3).

6. A screwing element according to any one of the preceding claims, **characterized in that** the internal thread (9) extends only over the axial length of the head (4) of the nut (1).

7. A screwing joint according to any one of the preceding claims, **characterized in that** the sleeve (3) has an external diameter which narrows towards the free end (5).

8. A screwing joint according to the claims from 3 to 7, **characterized in that** the plain rove (7) is an elastic plain rove (7'), in particular a disk-spring shaped one.

9. A screwing joint according to any one of the claims from 3 to 8, **characterized in that** in its stress removed state the internal diameter of the plain rove (7) is smaller than the thickest area of the sleeve (3), but greater than the diameter of the annular groove (8) bottom

10. A screwing joint according to any one of the claims from 3 to 9, **characterized in that** there are radially externally extending notches from the internal diameter of the plain rove (7 and 7' respectively) but without reaching the external diameter.

11. A screwing joint according to any one of the claims from 3 to 10, **characterized in that** the internal diameter of the plain rove (7), in particular of the elastic plain rove (7'), is greater than the external diameter of the sleeve (3) in its narrowest area.

12. A screwing joint according to any one of the claims from 3 to 11, **characterized in that** the plain rove (7) and the elastic plain rove (7') respectively are made of a material which allows a radial stretching of their internal diameter.

13. A screwing joint according to any one of the preceding claims, **characterized in that** in the tightened state of the screwing joint, the head (4') of the screw (2) and its plain rove (7) if necessary, bear against the annular contact surface (6) from the front side of the sleeve (3).

## Revendications

1. Liaison par vis, où le vissage est composé d'un écrou (1), d'une vis (2) ainsi que d'au moins une rondelle plate élastique (7') et d'au moins deux composants à visser (11a, 11b) entre l'écrou (1) et la vis (2), percés lors du vissage, où
- une douille (3) formant une jonction par adhérence des formes avec au moins l'un des éléments du vissage est prévue,
- au moins l'un des éléments de vissage (l'écrou ou la vis) présente une tête (4),
- la douille (3) possède un diamètre externe inférieur au diamètre interne du trou de passage pratiqué dans le composant à visser (11a, 11b) et où
- une surface de contact (6) est prévue à l'extrémité libre (5) sur la partie frontale de la douille (3), **caractérisée en ce que** la douille (3) passe par les composants à visser (11a, 11b), servant de pièce d'écartement entre l'écrou (1) et la vis (2).

2. Liaison par vis conforme à la revendication 1, **caractérisée en ce que** une rondelle plate (7) est prévue à la transition entre la tête (4) et la douille (3).

3. Liaison par vis conforme à la revendication 2, **caractérisée en ce que** par rapport à la tête (4) et la douille (3) formant une jonction par adhérence de formes, la rondelle plate (7) est disposée dans une cannelure annulaire (8) de manière rotative mais sans pouvoir être perdue dans la direction axiale (10).

4. Liaison par vis conforme à la revendication 3, **caractérisée en ce que** la rondelle plate (7) forme une jonction par adhérence de formes avec la tête (4) de l'élément de vissage, ladite rondelle étant une rondelle élastique et serrant ledit l'élément de vissage en sens radial et axial dans la direction du composant à visser.

5. Liaison par vis conforme à l'une des revendications précédentes **caractérisée en ce que** le filet interne (9) s'étend sur l'extension axiale de l'écrou (1) et/ou de la douille (3).

6. Liaison par vis conforme à l'une des revendications précédentes **caractérisée en ce que** le filet interne (9) s'étend uniquement sur l'extension axiale de la tête (4) de l'écrou (1).

7. Liaison par vis conforme à l'une des revendications précédentes **caractérisée en ce que** la douille (3) possède un diamètre externe qui se rétrécit en direction de l'extrémité libre (5).

8. Liaison par vis conforme à l'une des revendications 3 à 7, **caractérisée en ce que** la rondelle plate (7) est une rondelle plate élastique (7') se présentant surtout sous la forme d'un disque ressort.

9. Liaison par vis conforme à l'une des revendications 3 à 8, **caractérisée en ce que** en l'absence des contraintes, le diamètre interne de la rondelle plate (7) est inférieur à la zone le plus épaisse de la douille (3) mais supérieur au diamètre de la base de la cannelure annulaire (8).

10. Liaison par vis conforme à l'une des revendications 3 à 9, **caractérisée en ce que** des encoches s'étendent en sens radial vers l'extérieur, depuis le diamètre interne de la rondelle plate (7 respectivement 7') mais sans atteindre le diamètre externe.

11. Liaison par vis conforme à l'une des revendications 3 à 10, **caractérisée en ce que** le diamètre interne de la rondelle plate (7) et surtout celui de la rondelle plate élastique (7') sont supérieurs au diamètre externe de la douille (3) à son endroit le plus étroit.

12. Liaison par vis conforme à l'une des revendications 3 à 11, **caractérisée en ce que** la rondelle plate (7) respectivement la rondelle plate élastique (7') sont réalisées dans un matériau permettant l'élargissement radial de leur diamètre interne.

13. Liaison par vis conforme à l'une des revendications précédentes, **caractérisée en ce que** lorsque la liaison par vis est serrée, la tête (4') de la vis respectivement, le cas échéant, la rondelle plate (7) associée à la vis sont pressées contre la surface de contact annulaire (6) sur la partie frontale de la douille (3).
